(19) Europäisches Patentamt
European Patent Office
Office européen des brevets

(11) **EP 4 286 129 A1**

(12) **EUROPEAN PATENT APPLICATION**

(43) Date of publication:
06.12.2023 Bulletin 2023/49

(21) Application number: 23158914.4

(22) Date of filing: 28.02.2023

(51) International Patent Classification (IPC):
*B29B 17/00* (2006.01)     *B29C 49/00* (2006.01)
*B29K 105/26* (2006.01)

(52) Cooperative Patent Classification (CPC):
**B29B 17/0042; B29C 49/0005;** B29K 2105/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **The Procter & Gamble Company
Cincinnati, OH 45202 (US)**

(72) Inventor: **DAGNELIE, Thierry Christian Francis
1853 Strombeek-Bever (BE)**

(74) Representative: **P&G Patent Belgium UK
N.V. Procter & Gamble Services Company S.A.
Temselaan 100
1853 Strombeek-Bever (BE)**

(54) **CONTAINERS HAVING HIGH RECYCLED MATERIAL CONTENT**

(57)     A process for making containers having recycled thermoplastic polymer material and filling the same, is described. The process includes the steps of: (i) pre-treating a recycled plastic polymer material for example by separating, sorting, cleaning and/or drying; (ii) shredding the pre-treated recycled plastic polymer to produce recycled plastic polymer flakes; (iii) compacting the recycled plastic polymer flakes to form compacted recycled plastic polymer pellets and processing the compacted recycled plastic polymer pellets to produce a pre-form; (iv) creating a container having at least 50 wt% recycled plastic from said pre-form; and (v) filling said container with a composition.

EP 4 286 129 A1

**Description**

FIELD OF THE INVENTION

Filled containers and the process for making these filled containers having high weight percentages of recycled material content.

BACKGROUND OF THE INVENTION

The desire for products using sustainable materials is at an all time high. It is predicted that such demand will only increase going into the future. One of the particular focus areas for sustainability regards the use of virgin plastic materials. Virgin plastic is defined as plastic material utilizing resin produced by natural gas or crude oil which does not include any recycled materials. The use of virgin plastic materials is often scrutinized because it necessitates the production of additional plastic material and introduces the same into an ecosystem which already has an abundant supply of plastic material that can be reused.

In order to reduce the use of virgin plastic materials, some product manufacturers have tried to increase the level of recycled plastic content within their products / containers. However, while this may be amenable for some products, the introduction of a higher weight percentage of recycled plastic material can cause manufacturing problems for others. For example, for containers, particularly those that are desired to be transparent to allow visualization of the contents by the consumer, the introduction of recycled plastic content to the process can cause the container to be cloudy, i.e. less transparent. This can be unappealing to consumers. Another challenge with adding recycled content is that the resultant packaging typically is less strong and as such more brittle, e.g. susceptible for breakage/cracking upon accidental drop or any accidental force applied thereon.

Additionally, the introduction of recycled content can also lead to a less uniform or homogeneous packing of the individual polymers in the plastic. This heterogeneity can impact the overall packaging characteristics, like strength and elasticity, detrimentally and create internal channels in the packaging which can facilitate migration of product components through the plastic or even allow for migration of contaminants into the plastic and the composition.

Based on the foregoing, there is a need for plastic containers having a high weight percentage of recycled plastic content that still provide desirable consumer aspects.

SUMMARY OF INVENTION

A process for making a filled containers comprising recycled thermoplastic polymer material, in accordance with the present disclosure comprises the steps of: (i) pre-treating a recycled plastic polymer material for example by separating, sorting, cleaning and/or drying; (ii) shredding the pre-treated recycled plastic polymer to produce recycled plastic polymer flakes; (iii) compacting the recycled plastic polymer flakes to form compacted recycled plastic polymer pellets and processing the compacted recycled plastic polymer pellets to produce a pre-form; (iv) creating a container comprising at least 50 wt% recycled plastic from said pre-form; and (v) filling said container with a composition.

DETAILED DESCRIPTION OF THE INVENTION

The containers of the present disclosure comprise a high weight percentage of recycled content thereby reducing the weight percentage of virgin plastic utilized. Additionally, where the containers are desired to be transparent, the containers of the present disclosure can maintain a reasonable level of transparency compared to their virgin plastic counterparts despite including a high percentage of recycled content. Specifically, containers of the present disclosure can exhibit higher transparency over conventional containers comprising the same amount of recycled plastic content. Additionally, the containers of the present disclosure can exhibit sufficient strength and elasticity despite having a high level of recycled content. Moreover, the containers of the present disclosure can provide a more homogeneous polymer packing than that of conventional plastic containers comprising recycled content, having improved compatibility with the enclosed detergent composition accordingly.

For ease of the discussion, as used herein, "virgin plastic" means a resin produced using natural gas or crude oil and does not contain any recycled materials.

As used herein "post-consumer recycled plastic" or "PCR plastic" refers to material that is made from the items that consumers recycle every day, like plastic bottles.

As used herein "post-industrial recycled plastic" or "PIR plastic" refers to material that is made from plastic scrap that is generated as waste from an industrial process.

Regardless of whether PCR and/or PIR plastics are utilized, it is worth mentioning the conventional recycling process of these materials. The recycled material is washed, sorted, and then shredded. The shredding process reduces the recycled plastic to flakes of plastic polymeric material. These flakes typically have a bulk density of around 300 kg/m$^3$. The flakes are then subjected to an extrusion and pelleting process. The resulting pellets thereafter can be dried and crystalized. The resulting pellets typically have an average bulk density of around 800 kg/m$^3$. These pellets can then optionally be blended with virgin plastic if desired. The blend may then be subjected to an injection molding process using conventional molding machines and procedures to produce a plastic pre-form. The plastic preform can then be further processed for example to make a bottle, using known blow molding equipment and processes.

During the extrusion process, the recycled material is heated to a temperature that causes the polymeric material to crystalize, at least to a degree. In a typical extrusion process, an extruder will have a flake hopper at one end, and a die at the other end. In between, the extruder may have a horizontal elongate barrel housing a screw and heaters. The extruder may have a vent located near the mid-point of the barrel, where volatile materials may separate from solid or liquid materials passing along the barrel. Extruders typically operate at temperatures in the region of 160°C to 270°C, though the exact temperature will depend on the polymer material being extruded. Once they have been extruded, the pellets are typically cooled in a water bath before undergoing subsequent processing.

As mentioned heretofore, the inclusion of high weight percentages of PIR and/or PCR, can cause resultant containers / bottles to be cloudy. Without wishing to be bound by theory, it is believed that the heat of the extrusion process can create too much crystallinity in the plastic material being recycled. It is further believed that this increase in crystallinity increases the cloudiness of the resulting container / bottle. Similarly, an increase in crystallinity is also believed to cause more brittleness and lead to an increased likelihood of breakage.

A process for creating the filled containers / bottles of the present disclosure comprises the steps of: (i) pre-treating a recycled plastic polymeric material for example by separating, sorting, cleaning, and/or drying; (ii) shredding the pre-treated recycled plastic polymer to produce recycled plastic polymer flakes; (iii) processing the recycled plastic polymer flakes to produce a pre-form; (iv) creating a container from said pre-form comprising at least 50 wt% recycled plastic; and (v) filling said container with a composition. This processing of the polymer flakes is notably different from the conventional extrusion process described above, in that the polymer flakes are compacted to form pellets rather than melted to form pellets.

It is believed that the compaction step, as no additional heat may be added above what is generated via compaction itself, does not facilitate crystallization of the recycled plastic polymeric material to the extent that the conventional pelletizing process does. It is further believed that this lower level of crystallinity can allow for higher levels of recycled material to be present in the containers / bottles of the present disclosure without the negative impacts mentioned herein.

The recycled plastic polymeric material, whether PIR or PCR plastic, may be received in bales of crushed plastic bottles. The bale may undergo sorting to separate materials which are different from one another. For example, in polyethylene terephthalate (PET) recycling streams, the recycled plastic material may be separated by color.

The separation and/or sorting steps may ensure that the recycled polymer material is essentially all of one type of polymer, including essentially of all of one color of each polymer type, and free of other polymers and contamination. The polymer material may typically be of a single polymer type to provide optimal process conditions for the specific polymer. However, it is possible to process mixtures of polymers by the process of the present disclosure. For example, where the polymeric material comprises a mixture of one or more thermoplastic polymers selected from high density polyethylene (HDPE), low density polyethylene (LDPE), polypropylene (PP), polyethylene terephthalate (PET) and the like. Preferably, for the containers / bottles of the present disclosure, the polymer is PET and PET blends, most preferably solely PET.

The sorting step can be achieved by manual sorting, sorting by physical principles such as specific gravity from other materials. In the alternative, automatic sorting techniques such as near infrared analysis may be used. These can be used for example either in granulated flake format as obtained for example from a grinding step, or large product format.

The recycled plastic polymeric material may be cleaned to reduce the existence of any contaminants, e.g. food and/or label contamination, associated with the recycled plastic polymeric material. This washing step may be even more critical where PIR plastics are utilized as opposed to PCR plastics. The pre-treated polymeric material may then be shredded into flakes. The flakes can then be rewashed. Subsequent to the washing step, the recycled polymer material can be at least 98.0 wt%, preferably at least 99.0 wt%, preferably at least 99.5 wt% and preferably at least 99.9 wt% pure polymer.

Cleaning the polymer material typically comprises cleaning a surface of the polymer to remove external substances. Cleaning ideally should remove substantially all of the surface contaminants, any adsorbed substances and most of any surface printing, adhesives, or labels or other external substances associated with polymer material. For example, the cleaning step may comprise cleaning the surface of the polymer material by washing with fluids, and/or abrasion with solids. The washing and/or abrasion process can be performed with or without surfactants, using high or low temperatures. However, pre-treating a recycled plastic polymeric material for example by separating, sorting, cleaning, and/or drying step should be performed below the melting point of the recycled plastic polymer material.

Optionally, cleaning step(s) may be carried out using hot water. Whilst the hot washing is/are optional and not essential for the process of the present disclosure, hot washing as part of a pre-treatment regime (especially in step (i)) can help to improve the process, as hot washing is relatively efficient at removing labels, glues and some of the inks regularly used on packaging, as well as the volatile components.

Any hot washing step may typically take the form of hot water washing typically at about 50°C to about 120°C, preferably at about 50°C to 80°C. The hot washing step may also be carried out with an alkaline solution, for example containing sodium hydroxide and/or potassium hydroxide at a concentration of about 0.5 to 2.5 wt%. The alkaline solution may further comprise a detergent with a concentration of about 0.1 to 0.3 wt%. A suitable detergent is typically a low foaming nonionic surfactant, but others such as anionic surfactants, for example sodium lauryl sulphonate may be used. The washing time of a hot washing step may be from 5 to 30 minutes, conveniently from 5 to 10 minutes.

It is worth noting that the sorting step may be performed prior to the cleaning step, or the cleaning step may be performed prior to the sorting step. However, regardless of the order of the cleaning and sorting steps, each of these steps preferably occurs prior to compacting the polymer flakes.

As noted, the polymeric material may be shredded into polymer flakes. The shredding or grinding of the polymer material in step (ii) is preferably performed after the cleaning, drying separating and/or sorting steps in step (i). Such equipment and processes are known and conventional. The resultant polymer flakes typically have a bulk density in the region of 100-500 kg/m$^3$, conveniently 200-400 kg/m$^3$, conveniently around 300 kg/m$^3$.

An additional cleaning step may be utilized after the polymer flakes are formed and prior to the compaction of the polymer flakes. The additional cleaning step may be carried out as described heretofore regarding the cleaning step. The polymer flakes should also be dried prior to compaction, this is particularly the case where the additional cleaning step is utilized. While other physical forms of the polymer may also be generated after step (ii), polymer flakes are preferred.

Following any cleaning step, the polymer material e.g. flakes, would then typically be dried to a moisture level of less than 1 wt%, more typically less than 0.2 wt%, preferably to a level of less than 0.05 wt%, more preferably less than 0.02 wt%. This can be achieved for example by a combination of drying in warm air and drying mechanically in a centrifuge.

The flakes may then be compacted into pellets. Ideally, the compaction process comprises simply applying physical pressure to the polymer flakes with no additional source of heat being applied. The only heat involved being that generated by the actual physical compaction, including by friction within the compaction apparatus. The compacted polymer pellets may be manufactured by known equipment and techniques. It is preferred that the step of compacting the polymer to form compacted pellets is carried out just prior, preferably immediately prior to the step of producing the pre-form.

As a result of the compaction, the resultant compacted pellets conveniently have a bulk density higher than 300 kg/m$^3$, preferably more than 350 kg/m$^3$, more preferably more than 380 kg/m$^3$. Preferably, the compacted pellets have a density no higher than about 850 kg/m$^3$ and preferably have a bulk density of from about 400-600 kg/m$^3$ more preferably about 500 kg/m$^3$.

Any suitable device may be utilized to compact the polymer flakes. For example, a disc agglomerator may be used to compact the polymer flakes into compacted pellets. Preferably, the disc agglomerator is one which compresses the flakes with no additional thermal input, any heat imparted to the polymer flakes in the process originating from friction within the agglomerator. A benefit of this is that the polymer flakes suffer minimal thermal damage. Preferably, the polymer flakes are only subjected to kneading and rolling processes with the composition step. Preferably, the polymer flakes are subjected only to the heat arising through friction within the agglomerator, which may cause the polymer material to plastify, sinter and be compressed.

A suitable disc agglomerator is available from WIPA, Germany under the trade name PlastCompactor. In such an agglomerator, a feeding system transports shredded plastic to a buffer container. An agitator in the buffer container provides permanent filling of a feeding screw and prevents bridging. The feeding screw pre-compacts the plastic material to be recycled, and feeds it to a disk pair, consisting of a moving rotor disk and a non-rotating stator disk serving as a counter element. Kneading and rolling between the disks creates friction and plastifies, sinters and compresses the polymer flakes. If desired, additives such as colour pigments, plasticizer, UV light blockers, anti-oxidants, and the like can be added using dosing units into the feeding screw.

In such compaction procedures and apparatuses, the dwell time of the polymer flakes in the compactor is typically a matter of a few seconds. Although heat is generated, the melting point of the polymer flakes is not reached, and the material is only being transformed into a pasty condition which reduces the risk of the disks building up polymeric material thereon. The output of the compaction apparatus is typically in the form of noodles, which may be cut to the desired size to form pellets. The diameter of the noodles is determined by a screen in the agglomorator. The heat generated in the noodles/pellets contributes to moisture evaporation from them, helping the moisture content of them reduce, ideally and typically to less than about 0.5 wt%, conveniently less than 0.1 wt%, preferably less than 0.02 wt%.

The pellets may typically be cooled by air-cooling. Preferably, the temperature of the plastics material being processed in the compaction step reaches at least 80°C, between 80°C to 160°C, or between 130°C to 150°C. Provided this temperature is reached during the compaction processing, it is believed that the combination of temperature and compaction causes the polymer material to achieve a viscoelastic state and develops a degree of crystallization. This crystallization provides the compacted polymer product with beneficial properties in respect of subsequent processing, since in subsequent processes involving heating, the polymer is less likely to be sticky.

A further advantage of using a compaction step prior to forming a pre-form is that after compaction it is not necessary to carry out a water-cooling step after compaction. Recall, such a water-cooling step is usual at the end of an extrusion process. The absence of the need for a drying step is advantageous, as in subsequent processing step such as forming a pre-form or other blow molding techniques, it is desirable that the water content of the plastic material before being dried is relatively low, as previously described. During the subsequent injection procedures, water can cause the polymer material to hydrolyse if it is not dried properly. Omitting a water-cooling step means not only is energy saved by not needing to dry the cooled polymer material, but there is also reduced risk that polymer used in subsequent injection steps contains disadvantageous levels of moisture, which could lead to undesirable hydrolysis of the polymer and polymer article.

The noodles resulting from the compaction step may be subsequently processed, e.g., cut into pellets, shortly after they emerge from the compaction apparatus. The subsequent rapid processing of noodles from the compaction step can not only be energy saving in subsequent steps, as less energy is required to warm the noodles to processing temperature for forming the pre-mold, but because the noodles have not had time to cool, they will not have picked up moisture by any prolonged storage. For example, preferably, the noodles subsequently processed will have not cooled to a temperature not higher than 60°C, in order that they are not near their softening point which may generate stickiness.

An additional advantage of the process of the present disclosure is that in contrast to conventional extrusion processes which require large amounts of energy, the compaction process of the present disclosure utilizes less energy. This in turn can result in a lower carbon footprint for the containers / bottles of the present disclosure.

After the creation of the recycled polymer pellets, a mixture of virgin polymer and recycled polymer can be used to make subsequently processed articles such as pre-molds and blow-molded articles. For example, the process (and the subsequently formed article) can use at least 10 wt%, preferably at least 20 wt%, preferably at least 30 wt%, preferably at least 40 wt%, preferably at least 50 wt%, preferably at least 60 wt%, preferably at least 70 wt%, preferably at least 80 wt%, preferably at least 90 wt% of recycled compacted polymer. In some examples the process (and subsequently formed article) can be made out of 100 wt% recycled compacted polymer.

In step (iii) of the process, i.e., the production of a pre-form which may be subsequently processed to form e.g., blow-molded articles, the pre-form can take a number of forms. For example, the pre-form may be single layer, or it may be a laminate, having e.g., two, three, or four or more layers, in ways which are conventionally known in the art. Preferably the pre-form is a single layer.

Where the pre-form is a laminated preform, the layers may be arranged in any suitable manner. For example, one of more of the central layers of the pre-form (i.e., the non-outward facing layers) may be formed by recycled polymer made with compacted pellets of the present disclosure. The outward-facing layers may be made from virgin or more highly purified thermoplastic polymer, e.g., virgin PET, or more highly purified PET. The central layer or layers may conveniently be colored or opaque. Such embodiments have been found to be advantageous since the central layer or layers can be expected to be relatively cheap, having been made with recycled polymer material. However, if such recycled material does suffer from contaminants by virtue of having been recycled, the effects of such contaminants such as causing bursts or microholes, are mitigated by the outward facing layers of the laminate.

Subsequent to the formation of the pre-form, a container, preferably a bottle, can be created wherein the bottle comprises at least 10 wt%, preferably at least 20 wt%, preferably at least 30 wt%, preferably at least 40 wt%, preferably at least 50 wt%, preferably at least 60 wt%, preferably at least 70 wt%, preferably at least 80 wt%, preferably at least 90 wt% of recycled plastic. In some examples the container can be made out of 100 wt% recycled compacted polymer, specifically including all values within these ranges and any ranges created thereby. Still in other example, the bottles created in accordance with the method of the present disclosure may comprise from about 10 wt% to about 100 wt% recycled plastic, more preferably from about 25 wt% to about 75 wt%, even more preferably from about 35 wt% to about 60 wt% or most preferably from about 40 wt% to about 55 wt%, specifically including all values within these ranges and any ranges created thereby.

Any suitable container for housing liquids and/or powders may be utilized. Some examples of suitable containers include plastic bottles, inverted bottles and spray dispensers. Some examples include inverted containers described in U.S. Patent Nos. 10,131,473; 10,611,531; 10,934,510; 11,427,793; and 11,136,160. For the inverted containers, a housing may be attached to the container. The housing may comprise an orifice configured to allow dispensing of the contents within the container. The orifice may be capped or may comprise a slit valve such as described in U.S. Patent No. 10,611,531. It is worth noting that the process and containers of the present disclosure are not limited to inverted containers. Again, any suitable container may be utilized.

The cap can comprise a spout, with the orifice at the exit of the spout. The spout can have a length of from 0.5 mm to 10 mm. The orifice can have an open cross-sectional surface area at the exit of from 3 mm$^2$ to 20 mm$^2$, preferably

from 3.8 mm$^2$ to 12 mm$^2$, more preferably from 5 mm$^2$ to 10 mm$^2$, wherein the container further comprises the composition according to the invention. The cross-sectional surface area is measured perpendicular to the liquid exit from the container (that is, perpendicular to the liquid flow during dispensing).

Alternatively the container can be a spray dispenser. The spray dispenser comprises a housing to accommodate the composition of the invention and spraying means. Suitable spray dispensers include hand pump (sometimes referred to as "trigger") devices, pressurized can devices, electrostatic spray devices, etc. Preferably the spray dispenser is non-pressurized and the spray means are of the trigger dispensing type. Preferably the spray dispenser is non-pressurized and the spray means are of the trigger dispensing type.

Once the container is created, the container can be further processed by filling the container with a composition. Any suitable composition may be utilized. Those skilled in the art will be aware of suitable means to fill a container with a product. Some examples of suitable compositions include automatic dishwashing detergent compositions, automatic dishwashing rinse agents, hand dish washing detergents, hand dish washing detergent additives, hand washing soap, body wash, shampoo, conditioner, laundry detergents, fabric softeners, hard surface cleaners, and the like. Preferably the composition is a liquid hand dishwashing composition. These compositions may comprise a liquid, gel, powder, or a combination of two or more. Preferably, the composition is a liquid. As an example, the containers of the present disclosure can typically comprise from 200 ml to 5,000 ml, preferably from 350 ml to 2000 ml, more preferably from 400 ml to 1,000 ml of the liquid hand dishwashing detergent composition.

As noted previously, any suitable composition may be utilized in the containers of the present disclosure. One particular example is a cleaning composition, specifically a hand dishwashing detergent. The hand dishwashing composition may be a liquid hand dishwashing detergent composition, aiming to be dispensed through the orifice of a liquid bottle or an inverted liquid container as described above. Alternatively the hand dishwashing product may be a spray product.

Hand dishwashing liquid composition

The liquid detergent composition according to the present disclosure may be a hand dishwashing detergent composition, more preferably a liquid hand dishwashing detergent composition, to be packaged in a bottle or inverted container as already described herein and dosed thereof through an orifice. The liquid hand-dishwashing detergent composition preferably is an aqueous cleaning composition, comprising from 50% to 90%, preferably from 60% to 75%, by weight of the total composition of water. Preferably the pH of the detergent composition of the invention, measured as a 10% product concentration in demineralized water at 20°C, is adjusted to between 3 and 14, more preferably between 4 and 13, more preferably between 6 and 12 and most preferably between 8 and 10. The composition of the present invention can be Newtonian or non-Newtonian, preferably Newtonian. Preferably, the composition has a viscosity of from 10 mPa·s to 10,000 mPa·s, preferably from 100 mPa·s to 5,000 mPa·s, more preferably from 300 mPa·s to 2,000 mPa·s, or most preferably from 500 mPa·s to 1,500 mPa·s, alternatively combinations thereof. The viscosity is measured at 20°C with a Brookfield RT Viscometer using spindle 31 with the RPM of the viscometer adjusted to achieve a torque of between 40% and 60%.

The cleaning composition comprises from 5% to 50%, preferably from 8% to 45%, more preferably from 15% to 40%, by weight of the total composition of a surfactant system. The surfactant system preferably comprises from 60% to 90%, more preferably from 70% to 80% by weight of the surfactant system of an anionic surfactant. Alkyl sulphated anionic surfactants are preferred, particularly those selected from the group consisting of: alkyl sulphate, alkyl alkoxy sulphate preferably alkyl ethoxy sulphate, and mixtures thereof. The alkyl sulphated anionic surfactant preferably has an average alkyl chain length of from 8 to 18, preferably from 10 to 14, more preferably from 12 to 14, most preferably from 12 to 13 carbon atoms. The alkyl sulphated anionic surfactant preferably has an average degree of alkoxylation preferably ethoxylation, of less than 5, preferably less than 3, more preferably from 0.5 to 2.0, most preferably from 0.5 to 0.9. Alternatively the alkyl sulphated anionic surfactant can be free of alkoxylation. The alkyl sulphated anionic surfactant preferably has a weight average degree of branching of more than 10%, preferably more than 20%, more preferably more than 30%, even more preferably between 30% and 60%, most preferably between 30% and 50%. Suitable counterions include alkali metal cation earth alkali metal cation, alkanolammonium or ammonium or substituted ammonium, but preferably sodium. Suitable examples of commercially available alkyl sulphate anionic surfactants include, those derived from alcohols sold under the Neodol® brand-name by Shell, or the Lial®, Isalchem®, and Safol® brand-names by Sasol, or some of the natural alcohols produced by The Procter & Gamble Chemicals company.

The surfactant system preferably comprises from 0.1% to 20%, more preferably from 0.5% to 15% and especially from 2% to 10% by weight of the liquid hand dishwashing detergent composition of a co-surfactant. Preferred co-surfactants are selected from the group consisting of an amphoteric surfactant, a zwitterionic surfactant, and mixtures thereof. The anionic surfactant to the co-surfactant weight ratio can be from 1:1 to 8:1, preferably from 2:1 to 5:1, more preferably from 2.5:1 to 4:1. The co-surfactant is preferably an amphoteric surfactant, more preferably an amine oxide surfactant. Preferably, the amine oxide surfactant is selected from the group consisting of: alkyl dimethyl amine oxide, alkyl amido propyl dimethyl amine oxide, and mixtures thereof, most preferably C12-C14 alkyl dimethyl amine oxide. Suitable zwitterionic surfactants include betaine surfactants, preferably cocamidopropyl betaine.

Preferably, the surfactant system of the composition of the present invention further comprises from 1% to 25%, preferably from 1.25% to 20%, more preferably from 1.5% to 15%, most preferably from 1.5% to 5%, by weight of the surfactant system, of a non-ionic surfactant. Suitable nonionic surfactants can be selected from the group consisting of: alkoxylated non-ionic surfactant, alkyl polyglucoside ("APG") surfactant, and mixtures thereof. Suitable alkoxylated non-ionic surfactants can be linear or branched, primary or secondary alkyl alkoxylated preferably alkyl ethoxylated non-ionic surfactants comprising on average from 9 to 15, preferably from 10 to 14 carbon atoms in its alkyl chain and on average from 5 to 12, preferably from 6 to 10, most preferably from 7 to 8, units of ethylene oxide per mole of alcohol. Most preferably, the alkyl polyglucoside surfactant has an average alkyl carbon chain length between 10 and 16, preferably between 10 and 14, most preferably between 12 and 14, with an average degree of polymerization of between 0.5 and 2.5 preferably between 1 and 2, most preferably between 1.2 and 1.6. C8-C16 alkyl polyglucosides are commercially available from several suppliers (e.g., Simusol® surfactants from Seppic Corporation; and Glucopon® 600 CSUP, Glucopon® 650 EC, Glucopon® 600 CSUP/MB, and Glucopon® 650 EC/MB, from BASF Corporation).

The liquid hand dishwashing detergent composition herein may optionally comprise a number of other adjunct ingredients such as builders (e.g., preferably citrate), chelants (e.g., preferably GLDA), conditioning polymers, cleaning polymers including polyalkoxylated polyalkylene imines, surface modifying polymers, soil flocculating polymers, sudsing polymers including EO-PO-EO triblock copolymers, grease cleaning amines including cyclic polyamines, structurants, emollients, humectants, skin rejuvenating actives, enzymes, carboxylic acids, scrubbing particles, bleach and bleach activators, perfumes, malodor control agents, pigments, dyes, opacifiers, beads, pearlescent particles, microcapsules, organic solvents, inorganic cations such as alkaline earth metals such as Ca/Mg-ions, antibacterial agents, preservatives, viscosity adjusters (e.g., salt such as NaCl, and other mono-, di- and trivalent salts) and pH adjusters and buffering means (e.g. carboxylic acids such as citric acid, HCl, NaOH, KOH, alkanolamines, phosphoric and sulfonic acids, carbonates such as sodium carbonates, bicarbonates, sesquicarbonates, borates, silicates, phosphates, imidazole and alike). The composition comprises less than 10ppm preferably less than 1 ppm of dioxane, alternatively is free of dioxane, especially 1,4-dioxane.

The composition may comprise traces of packaging additives such as plasticizers that may have migrated from the packaging into the liquid detergent composition upon ageing of the product. Similarly traces of components of the liquid detergent composition such as solvents or perfume may have migrated into the packaging material.

Liquid hand dishwashing spray compositions :

The liquid spray cleaning composition typically comprises an aqueous carrier in which all the other composition actives are dissolved or eventually dispersed. As such, water can be present in an amount of from 60% to 90%, preferably from 75% to 85% by weight of the composition.

Preferably the pH of the liquid hand dishwashing spray composition is greater than 8, more preferably from about 10 to about 12 and most preferably from about 10.5 to about 11.5, as measured at 20°C on the neat product composition. Preferably, the liquid hand dishwashing spray composition has a reserve alkalinity of from about 0.1 to about 1, more preferably from about 0.1 to about 0.5 measured as detailed herein below.

Reserve alkalinity is defined as the grams of NaOH per 100 g of composition required to titrate the test composition at pH 10 to come to the test composition pH. The reserve alkalinity for a solution is determined in the following manner.

A pH meter (for example An Orion Model 720A ) with a Ag/AgCl electrode (for example an Orion sure flow Electrode model 9172BN) is calibrated using standardized pH 7 and pH 10 buffers. A 100g of a 10% solution in distilled water at 20°C of the composition to be tested is prepared. The pH of the 10% solution is measured and the 100g solution is titrated down to pH 10 using a standardized solution of 0.1 N of HCl. The volume of 0.1N HCl required is recorded in ml. The reserve alkalinity is calculated as follows:

$$\text{Reserve Alkalinity} = \text{ml } 0.1\text{N HCl x } 0.1 \text{ (equivalent / liter) x Equivalent weight NaOH (g/equivalent) x 10}.$$

The liquid hand dishwashing spray cleaning product according to the present disclosure can comprise a composition having a Newtonian viscosity, such as from 1 mPa·s to 50 mPa·s, preferably from 1 mPa·s to 20 mPa·s, more preferably from 1 mPa·s to 10 mPa·s, at 20°C as measured using the method defined herein. Alternatively the cleaning product according to the present disclosure can comprise a composition having a shear thinning rheology profile, such as having a high shear viscosity of from 1 mPa's to 50 mPa s, preferably from 1 mPa s to 20 mPa s, more preferably from 5 mPa·s to 15 mPa·s, when measured at a shear rate of at 1000 s⁻¹ at 20°C, and a low shear viscosity of from 100 mPa·s to 1,000 mPa·s, preferably from 200 mPa·s to 500 mPa s, when measured at 0.1 s⁻¹ at 20°C, using the method defined herein. Preferably the cleaning composition of use in the present disclosure has a Newtonian viscosity.

Viscosity method:

The flow curve of products is measured with the use of a Rheometer (TA instruments - model DHR1), a Peltier concentric cylinder temperature system (TA instruments) and a double gap cup and rotor (TA instruments). The flow curve procedure comprises a conditioning step and a flow ramp step at 20°C, the conditioning step comprising a 30s pre-shear step at a shear rate of 10s⁻¹ followed by a 120s zero shear equilibration time. The flow ramp step comprises a Logarithmical shear rate increase from 0.001 s⁻¹ to 10000 s⁻¹ in a time span of 300s. A data filter is set at the instrument recommended minimum torque value of $20/\mu Nm$.

"Low shear viscosity" is defined as the viscosity measured at a shear rate of 100 s⁻¹. "High shear viscosity" is measured at a shear rate of 10000 s⁻¹.

Surfactant system

The liquid hand dishwashing spray composition comprises from 2% to 25%, preferably from 5% to 20%, more preferably from 8% to 15% by weight thereof of a surfactant system. The surfactant system may comprise an alkyl sulphate or an alkyl ethoxylated sulfate anionic surfactant, a co-surfactant preferably selected from the group consisting of amphoteric surfactants, zwitterionic surfactants, and mixtures thereof, and optionally a non-ionic surfactant. Alternatively the surfactant system may comprise a non-ionic surfactant preferably an alkyl polyglucoside non-ionic surfactant, and a co-surfactant preferably selected from the group consisting of amphoteric surfactants, zwitterionic surfactants, and mixtures thereof, wherein the composition preferably comprises less than 3% by weight of the composition more preferably is free of anionic surfactant. Preferably, the co-surfactant is an amphoteric surfactant wherein the amphoteric co-surfactant is an amine oxide co-surfactant.

Preferably, the anionic alkyl sulfate or alkyl ethoxylated sulfate surfactant, or the alkyl polyglucoside surfactant, and the co-surfactant are present in the composition of the invention in a weight ratio of 10:1 to 1:2 preferably from 5:1 to 1:1.5 most preferably from 3:1 to 1:1.

When formulating an anionic surfactant alkyl ethoxy sulfates with an average degree of ethoxylation from about 2 to about 5, most preferably about 3 are preferred for use herein.

Alkyl sulfated anionic surfactant

A preferred sulfated anionic surfactant is an alkoxylate, more preferably, an alkoxylate sulfate anionic surfactant. Preferably, the alkoxy group is ethoxy. Alkyl sulphated anionic surfactants are preferred, particularly those selected from the group consisting of: alkyl sulphate, alkyl alkoxy sulphate preferably alkyl ethoxy sulphate, and mixtures thereof. The alkyl sulphated anionic surfactant preferably has an average alkyl chain length of from 8 to 18, preferably from 10 to 14, more preferably from 12 to 14, most preferably from 12 to 13 carbon atoms. The alkyl sulphated anionic surfactant preferably has an average degree of alkoxylation preferably ethoxylation, of less than or equal to 5, preferably from 2 to 5, most preferably about 3. The alkyl sulphate anionic surfactant preferably has a weight average degree of branching of more than 10%, preferably more than 20%, more preferably more than 30%, even more preferably between 30% and 60%, most preferably between 30% and 50%. Suitable counterions include alkali metal cation earth alkali metal cation, alkanolammonium or ammonium or substituted ammonium, but preferably sodium. Suitable examples of commercially available alkyl sulphate anionic surfactants include, those derived from alcohols sold under the Neodol® brand-name by Shell, or the Lial®, Isalchem®, and Safol® brand-names by Sasol, or some of the natural alcohols produced by The Procter & Gamble Chemicals company.

Alkyl polyglucoside surfactant:

The surfactant system preferably comprises the alkyl polyglucoside ("APG") at a level of from 2.0 to 12%, preferably from 2.5 to 10%, more preferably from 3.0% to 7.5% by weight of the composition. For improved crystalline grease removal, the alkyl polyglucoside surfactant can have a number average alkyl carbon chain length between 8 and 18, preferably between 10 and 16, most preferably between 12 and 14, with an average degree of polymerization of between 0.1 and 3.0 preferably between 1.0 and 2.0, most preferably between 1.2 and 1.6. For improved initial sudsing, the alkyl polyglucoside surfactant can have a number average alkyl carbon chain length between 8 and 18, preferably between 8 and 14, most preferably between 8 and 10, with an average degree of polymerization of between 0.1 and 3.0 preferably between 1.0 and 2.0, most preferably between 1.2 and 1.6. C8-C18 alkyl polyglucosides are commercially available from several suppliers (e.g., Simusol® surfactants from Seppic Corporation; and Glucopon® 600 CSUP, Glucopon® 650 EC, Glucopon® 600 CSUP/MB, and Glucopon® 650 EC/MB, from BASF Corporation).

Amphoteric surfactant

Preferably the amphoteric surfactant is an amine oxide. Preferred amine oxides are alkyl dimethyl amine oxide or alkyl amido propyl dimethyl amine oxide, more preferably alkyl dimethyl amine oxide and especially coco dimethyl amino oxide or the C12-C14 alkyl fraction thereof.

Amine oxide may have a linear or mid-branched alkyl moiety. Typical linear amine oxides include water-soluble amine oxides containing one R1 C8-18 alkyl moiety and 2 R2 and R3 moieties selected from the group consisting of C1-3 alkyl groups and C1-3 hydroxyalkyl groups. Preferably amine oxide is characterized by the formula R1 - N(R2)(R3) O wherein R1 is a C8-18 alkyl and R2 and R3 are selected from the group consisting of methyl, ethyl, propyl, isopropyl, 2-hydroxethyl, 2-hydroxypropyl and 3-hydroxypropyl. The linear amine oxide surfactants in particular may include linear C10-C18 alkyl dimethyl amine oxides and linear C8-C12 alkoxy ethyl dihydroxy ethyl amine oxides. Preferred amine oxides include linear C10, linear C10-C12, and linear C12-C14 alkyl dimethyl amine oxides. As used herein "mid-branched" means that the amine oxide has one alkyl moiety having n1 carbon atoms with one alkyl branch on the alkyl moiety having n2 carbon atoms. The alkyl branch is located on the $\alpha$ carbon from the nitrogen on t he alkyl moiety. This type of branching for the amine oxide is also known in the art as an internal amine oxide. The total sum of n1 and n2 is from 10 to 24 carbon atoms, preferably from 12 to 20, and more preferably from 10 to 16. The number of carbon atoms for the one alkyl moiety (n1) should be approximately the same number of carbon atoms as the one alkyl branch (n2) such that the one alkyl moiety and the one alkyl branch are symmetric. As used herein "symmetric" means that | n1 - n2 | is less than or equal to 5, preferably 4, most preferably from 0 to 4 carbon atoms in at least 50 wt%, more preferably at least 75 wt% to 100 wt% of the mid-branched amine oxides for use herein.

The amine oxide further comprises two moieties, independently selected from a C1-3 alkyl, a C1-3 hydroxyalkyl group, or a polyethylene oxide group containing an average of from about 1 to about 3 ethylene oxide groups. Preferably the two moieties are selected from a C1-3 alkyl, more preferably both are selected as a C1 alkyl.

Zwitterionic surfactant

Other suitable surfactants include zwitterionic surfactants, preferably betaines, such as alkyl betaines, alkylamidobetaine, amidazoliniumbetaine, sulfobetaine (INCI Sultaines) as well as the Phosphobetaine and preferably meets formula (I):

R1-[CO-X (CH2)n]x-N+(R2)(R3)-(CH2)m-[CH(OH)-CH2]y-Y-              (I)

wherein R1 is a saturated or unsaturated C6-22 alkyl residue, preferably C8-18 alkyl residue, in particular a saturated C10-16 alkyl residue, for example a saturated C12-14 alkyl residue; X is NH, NR4 with C1-4 Alkyl residue R4, O or S; n a number from 1 to 10, preferably 2 to 5, in particular 3; x is 0 or 1, preferably 1; R2, R3 are independently a C1-4 alkyl residue, potentially hydroxy substituted such as a hydroxyethyl, preferably a methyl; m a number from 1 to 4, in particular 1, 2 or 3; y is 0 or 1 and Y is COO, SO3, OPO(OR5)O or P(O)(OR5)O, whereby R5 is a hydrogen atom H or a C1-4 alkyl residue.

Preferred betaines are the alkyl betaines of the formula (Ia), the alkyl amido propyl betaine of the formula (Ib), the Sulfo betaines of the formula (Ic) and the Amido sulfobetaine of the formula (Id);

R1-N+(CH3)2-CH2COO-              (Ia)

R1-CO-NH(CH2)3-N+(CH3)2-CH2COO-              (Ib)

R1-N+(CH3)2-CH2CH(OH)CH2SO3-              (Ic)

R1-CO-NH-(CH2)3-N+(CH3)2-CH2CH(OH)CH2SO3-              (Id)

in which R1 has the same meaning as in formula I.

Particularly preferred betaines are the Carbobetaine [wherein Y-=COO-], in particular the Carbobetaine of the formula (Ia) and (Ib), more preferred are the Alkylamidobetaine of the formula (Ib). Examples of suitable betaines and sulfobetaine are the following [designated in accordance with INCI]: Almondamidopropyl of betaines, Apricotam idopropyl betaines, Avocadamidopropyl of betaines, Babassuamidopropyl of betaines, Behenam idopropyl betaines, Behenyl of betaines, betaines, Canolam idopropyl betaines, Capryl/Capram idopropyl betaines, Carnitine, Cetyl of betaines, Cocamidoethyl of betaines, Cocam idopropyl betaines, Cocam idopropyl Hydroxysultaine, Coco betaines, Coco Hydroxysultaine, Coco/Oleam idopropyl betaines, Coco Sultaine, Decyl of betaines, Dihydroxyethyl Oleyl Glycinate, Dihydroxyethyl Soy Glycinate, Dihydroxyethyl Stearyl Glycinate, Dihydroxyethyl Tallow Glycinate, Dimethicone Propyl of PG-betaines, Erucam idopropyl Hydroxysultaine, Hydrogenated Tallow of betaines, Isostearam idopropyl betaines, Lauram idopropyl betaines, Lauryl of betaines, Lauryl Hydroxysultaine, Lauryl Sultaine, Milkam idopropyl betaines, Minkamidopropyl of betaines, Myristam idopropyl betaines, Myristyl of betaines, Oleam idopropyl betaines, Oleam idopropyl Hydroxysultaine, Oleyl of betaines, Olivamidopropyl of betaines, Palmam idopropyl betaines, Palm itam idopropyl betaines, Palmitoyl Carnitine, Palm Kernelam idopropyl betaines, Polytetrafluoroethylene Acetoxypropyl of betaines, Ricinoleam idopropyl betaines, Sesam idopropyl betaines, Soyam idopropyl betaines, Stearam idopropyl betaines, Stearyl of betaines, Tallowam idopropyl betaines, Tallowam idopropyl Hydroxysultaine, Tallow of betaines, Tallow Dihydroxyethyl of betaines, Undecylenam idopropyl betaines and Wheat Germam idopropyl betaines.

A preferred betaine is, for example, Cocoamidopropylbetaine.

Further non-ionic surfactant:

The surfactant system can comprise further non-ionic surfactant. If present, the surfactant system can comprise from 0.5% to 10%, preferably from 1.0% to 5.0%, more preferably from 1.5% to 3.0% by weight of the composition of the further nonionic surfactant.

Suitable further non-ionic surfactants include alkyl alkoxylated non-ionic surfactants, more preferably ethoxylated non-ionic surfactants. Suitable nonionic surfactants include the condensation products of aliphatic alcohols with from 1 to 25 moles of ethylene oxide. The alkyl chain of the aliphatic alcohol can either be straight or branched, primary or secondary, preferably straight

The further nonionic surfactant is preferably a low-cut alkyl ethoxylate surfactant. Low cut alcohol ethoxylate surfactants include alcohol ethoxylate surfactants with an average alkyl carbon chain length of C10 and below. More preferably the alkyl ethoxylate surfactant has an average alkyl chain length of between C5 to C8, preferably between C5 to C7, and a number average degree of ethoxylation of from 1 to 10, preferably from 3 to 8, more preferably from 4 to 6. Suitable non-ionic alcohol ethoxylate surfactants include commercially available materials such as Emulan® HE50 or Lutensol® CS6250 (available from BASF).

Other suitable non-ionic surfactants for use herein can be selected from fatty alcohol polyglycol ethers, fatty acid glucamides, and mixtures thereof.

A preferred surfactant system for the detergent composition of the present invention comprises preferably consists of : (1) 4% to 10%, preferably 5% to 8% by weight of the composition of an alkyl ethoxylated sulfate anionic surfactant; (2) 1% to 5%, preferably from 1% to 4% by weight of the composition of a surfactant selected from the group consisting of amphoteric surfactant, zwitterionic surfactant and mixtures thereof, preferably an amine oxide co-surfactant, and (3) from 1.5% to 6.0% of a low cut alcohol ethoxylate nonionic surfactant, preferably having an average alkyl chain length of between C5 and C7 and a number average degree of ethoxylation of from 4 to 6.

Another preferred surfactant system comprises preferably consists of i) from 3.0 to 7.5% of an alkyl polyglucoside surfactant, preferably having an average alkyl chain length between 12 and 14 and an average degree of polymerization of between 1.2 and 1.6, ii) 2.0 to 4.0% of an amine oxide surfactant, preferably a C12-C14 dimethyl amine oxide surfactant, and iii) from 1.5% to 6.0% of a low cut alcohol ethoxylate nonionic surfactant, preferably having an average alkyl chain length of between C5 and C7 and a number average degree of ethoxylation of from 4 to 6. Such surfactant systems in combination with the glycol ethers described below can provide excellent cleaning and good foaming profile.

The liquid spray detergent composition could optionally comprise a cationic surfactant, preferably a quaternary ammonium type cationic surfactant.

Glycol ether solvent

The composition of the invention preferably comprises a glycol ether solvent selected from glycol ethers of Formula I or Formula II.

Formula I:         R1O(R2O)nR3

Wherein R1 is a linear or branched C4, C5 or C6 alkyl, a substituted or unsubstituted phenyl, preferably n-butyl. Benzyl is one of the substituted phenyls for use herein; R2 is ethyl or isopropyl, preferably isopropyl; R3 is hydrogen or methyl, preferably hydrogen; n is 1, 2 or 3, preferably 1 or 2.

Formula II:         R4O(R5O)nR6

Wherein R4 is n-propyl or isopropyl, preferably n-propyl; R5 is isopropyl; R6 is hydrogen or methyl, preferably hydrogen; n is 1, 2 or 3 preferably 1 or 2.

Suitable glycol ether solvents according to Formula I include ethyleneglycol n-butyl ether, diethyleneglycol n-butyl ether, triethyleneglycol n-butyl ether, propyleneglycol n-butyl ether, dipropyleneglycol n-butyl ether, tripropyleneglycol n-butyl ether, ethyleneglycol n-pentyl ether, diethyleneglycol n-pentyl ether, triethyleneglycol n-pentyl ether, propyleneglycol n-pentyl ether, dipropyleneglycol n-pentyl ether, tripropyleneglycol n-pentyl ether, ethyleneglycol n-hexyl ether, diethyleneglycol n-hexyl ether, triethyleneglycol n-hexyl ether, propyleneglycol n-hexyl ether, dipropyleneglycol n-hexyl ether, tripropyleneglycol n-hexyl ether, ethyleneglycol phenyl ether, diethyleneglycol phenyl ether, triethyleneglycol phenyl ether, propyleneglycol phenyl ether, dipropyleneglycol phenyl ether, tripropyleneglycol phenyl ether, ethyleneglycol benzyl ether, diethyleneglycol benzyl ether, triethyleneglycol benzyl ether, propyleneglycol benzyl ether, dipropyleneglycol benzyl ether, tripropyleneglycol benzyl ether, ethyleneglycol isobutyl ether, diethyleneglycol isobutyl ether, triethyleneglycol isobutyl ether, propyleneglycol isobutyl ether, dipropyleneglycol isobutyl ether, tripropyleneglycol isobutyl ether, ethyleneglycol isopentyl ether, diethyleneglycol isopentyl ether, triethyleneglycol isopentyl ether, propyleneglycol isopentyl ether, dipropyleneglycol isopentyl ether, tripropyleneglycol isopentyl ether, ethyleneglycol isohexyl ether, diethyleneglycol isohexyl ether, triethyleneglycol isohexyl ether, propyleneglycol isohexyl ether, dipropyleneglycol isohexyl ether, tripropyleneglycol isohexyl ether, ethyleneglycol n-butyl methyl ether, diethyleneglycol n-butyl methyl ether triethyleneglycol n-butyl methyl ether, propyleneglycol n-butyl methyl ether, dipropyleneglycol n-butyl methyl ether, tripropyleneglycol n-butyl methyl ether, ethyleneglycol n-pentyl methyl ether, diethyleneglycol n-pentyl methyl ether, triethyleneglycol n-pentyl methyl ether, propyleneglycol n-pentyl methyl ether, dipropyleneglycol n-pentyl methyl ether, tripropyleneglycol n-pentyl methyl ether, ethyleneglycol n-hexyl methyl ether, diethyleneglycol n-hexyl methyl ether, triethyleneglycol n-hexyl methyl ether, propyleneglycol n-hexyl methyl ether, dipropyleneglycol n-hexyl methyl ether, tripropyleneglycol n-hexyl methyl ether, ethyleneglycol phenyl methyl ether, diethyleneglycol phenyl methyl ether, triethyleneglycol phenyl methyl ether, propyleneglycol phenyl methyl ether, dipropyleneglycol phenyl methyl ether, tripropyleneglycol phenyl methyl ether, ethyleneglycol benzyl methyl ether, diethyleneglycol benzyl methyl ether, triethyleneglycol benzyl methyl ether, propyleneglycol benzyl methyl ether, dipropyleneglycol benzyl methyl ether, tripropyleneglycol benzyl methyl ether, ethyleneglycol isobutyl methyl ether, diethyleneglycol isobutyl methyl ether, triethyleneglycol isobutyl methyl ether, propyleneglycol isobutyl methyl ether, dipropyleneglycol isobutyl methyl ether, tripropyleneglycol isobutyl methyl ether, ethyleneglycol isopentyl methyl ether, diethyleneglycol isopentyl methyl ether, triethyleneglycol isopentyl methyl ether, propyleneglycol isopentyl methyl ether, dipropyleneglycol isopentyl methyl ether, tripropyleneglycol isopentyl methyl ether, ethyleneglycol isohexyl methyl ether, diethyleneglycol isohexyl methyl ether, triethyleneglycol isohexyl methyl ether, propyleneglycol isohexyl methyl ether, dipropyleneglycol isohexyl methyl ether, tripropyleneglycol isohexyl methyl ether, and mixtures thereof.

Preferred glycol ether solvents according to Formula I are ethyleneglycol n-butyl ether, diethyleneglycol n-butyl ether, triethyleneglycol n-butyl ether, propyleneglycol n-butyl ether, dipropyleneglycol n-butyl ether, tripropyleneglycol n-butyl ether, and mixtures thereof.

Most preferred glycol ethers according to Formula I are propyleneglycol n-butyl ether, dipropyleneglycol n-butyl ether, and mixtures thereof.

Suitable glycol ether solvents according to Formula II include propyleneglycol n-propyl ether, dipropyleneglycol n-propyl ether, tripropyleneglycol n-propyl ether, propyleneglycol isopropyl ether, dipropyleneglycol isopropyl ether, tripropyleneglycol isopropyl ether, propyleneglycol n-propyl methyl ether, dipropyleneglycol n-propyl methyl ether, tripropyleneglycol n-propyl methyl ether, propyleneglycol isopropyl methyl ether, dipropyleneglycol isopropyl methyl ether, tripropyleneglycol isopropyl methyl ether, and mixtures thereof.

Preferred glycol ether solvents according to Formula II are propyleneglycol n-propyl ether, dipropyleneglycol n-propyl ether, and mixtures thereof.

Most preferred glycol ether solvents are propyleneglycol n-butyl ether, dipropyleneglycol n-butyl ether, and mixtures thereof, especially dipropyleneglycol n-butyl ether.

Suitable glycol ether solvents can be purchased from The Dow Chemical Company, more particularly from the E-series (ethylene glycol based) Glycol Ethers and the P-series (propylene glycol based) Glycol Ethers line-ups. Suitable glycol ether solvents include Butyl Carbitol, Hexyl Carbitol, Butyl Cellosolve, Hexyl Cellosolve, Butoxytriglycol, Dowanol Eph, Dowanol PnP, Dowanol DPnP, Dowanol PnB, Dowanol DPnB, Dowanol TPnB, Dowanol PPh, and mixtures thereof.

The glycol ether of the product of the invention can boost foaming. The glycol ether solvent typically is present from about 1% to about 10%, preferably from about 2 to about 8%, most preferably from about 3% to about 7% by weight of the composition. Preferably the surfactant system and the glycol ether system are present in a relative weight ratio of from 5:1 to 1:5, preferably from 3:1 to 1:3.

Further optional ingredients

The composition herein may comprise a number of optional ingredients such as chelants such as aminocarboxylate or aminophosphonate chelants preferably GLDA, builders preferably carboxylate builders such as citric acid, rheology trimming agents selected from inorganic salts preferably sodium chloride, C2-C4 alcohols, C2-C4 polyols, poly alkylene glycols, hydrotropes, and mixtures thereof. Alternatively the composition may include a shear thinning rheology modified, preferably xanthan gum. The composition might also comprise pH trimming and/or buffering agents such as sodium hydroxyde, alkanolamines including monoethanolamine, and bicarbonate inorganic salts. The composition might comprise further minor ingredients selected from preservatives, UV stabilizers, antioxidants, perfumes, coloring agents and mixtures thereof. The composition comprises less than 10ppm preferably less than 1 ppm of dioxane, alternatively is free of dioxane, especially 1,4-dioxane.

The composition may comprise traces of packaging additives such as plasticizers that may have migrated from the spray packaging into the liquid detergent composition upon ageing of the product. Similarly traces of components of the liquid detergent composition such as solvents or perfume may have migrated into the spray packaging material.

EXAMPLES

The following are exemplary liquid hand dishwashing detergent formulations to be enclosed in liquid bottles (Table 1) respectively liquid spray containers (Table 2) made using at least 50% preferably up to 100% of compacted recycled plastic polymer pellets according to the invention. The formulation can be made through standard mixing of the individual components. Use of compacted recycled plastic polymer pellets to produce these containers improve the transparency hence visibility of below detergent compositions to the consumers and have good product-packaging compatibility despite the increased presence of recycled material.

Table 1: Liquid hand dishwashing detergent composition

| As 100% active | Ex 1 | Ex 2 | Ex 3 | Ex 4 | Ex 5 | Ex 6 |
|---|---|---|---|---|---|---|
| C12-C13AE0.6S anionic surfactant (Avg. branching : 37,84%) | 19.6 | - | 18.0 | - | 11.6 | 9.5 |
| C12-C13AS (avg branching : 30,40%) | - | 19.4 | - | 15.0 | - | - |
| C12-C14 dimethyl amine oxide | 6.5 | 8.2 | - | - | 4.1 | 4.7 |
| Cocoamidopropylbetaine | - | - | 6.0 | 5.0 | - | - |
| Alcohol ethoxylate nonionic surfactant (Neodol 91/8) | 1.0 | 4.0 | 2.0 | 3.0 | - | 7.1 |
| APG Glucopon 600 CSUP | - | - | - | - | - | 7.1 |
| Alkoxylated polyethyleneimine (PEI600EO24PO16) | 0.2 | 0.6 | - | - | - | - |
| Baxxodur ECX210 | 0.25 | - | - | - | 0.04 | 0.2 |
| GLDA chelant | - | 0.6 | 0.2 | 0.5 | - | - |
| ethanol | 2.4 | 2.2 | 2.0 | 1.5 | - | 3.1 |
| NaCl | 0.7 | 0.7 | 0.5 | 0.6 | 0.6 | - |
| MgCl2 | - | - | - | - | - | 0.2 |
| Sodium citrate | - | 0.5 | - | 0.25 | - | |
| MgSO4 | 0.06 | - | - | - | 0.01 | |
| Polypropyleneglycol (MW2000) | 0.9 | 0.2 | 1.0 | 0.4 | 0.5 | 0.4 |
| Sodium cumene sulphonate | - | - | - | - | - | 2.2 |
| Tergitol L64 | - | - | - | - | - | 0.5 |
| Water + Minor ingredients (perfume, dye, preservatives) | Balance to 100 | Balance to 100 | Balance to 100 | Balance to 100 | Balance to 100 | Balance to 100 |
| pH (at 10% product concentration in demineralized water - with NaOH trimming) | 9.0 | 9.2 | 8.5 | 8.0 | 9.2 | 7.5 |

Table 2: Liquid hand dishwashing spray detergent compositions

| As 100% active | Ex 7 | Ex 8 | Ex 9 | Ex 10 | Ex 11 |
|---|---|---|---|---|---|
| C12 to C14 APG (Glucopon ® 600) | 6.54 | - | 6.54 | - | - |
| C8 to C10 APG (Glucopon ® 215) | - | 6.54 | - | - | - |
| C12-14AE3S anionic surfactant | - | - | - | 6.54 | 6.54 |
| C12-14 dimethylamine oxide | 2.46 | 2.46 | - | 2.46 | - |
| Cocoamidopropyl betaine | - | - | 2.46 | - | 2.46 |
| C6EO5 nonionic surfactant (Lutensol CS6250) | 5.00 | 4.00 | 6.00 | 5.00 | 4.00 |
| Monoethanolamine | 0.50 | 0.50 | 0.50 | 0.50 | 0.50 |
| GLDA chelant | 1.00 | 0.75 | 0.50 | 1.00 | 1.00 |
| Citric acid | 0.12 | 0.12 | 0.12 | 0.12 | 0.12 |
| PPG (MW 2000) | 0.05 | 0.05 | 0.05 | 0.05 | 0.05 |
| ethanol | 0.34 | 0.34 | 0.34 | 0.34 | 0.34 |
| Dowanol DPnB glycol ether solvent | 5.00 | 4.00 | 6.00 | 5.00 | 5.00 |
| phenoxyethanol | 0.30 | 0.30 | 0.30 | 0.30 | 0.30 |
| perfume | 0.35 | 0.35 | 0.35 | 0.35 | 0.35 |
| Water and optional dyes | Balance to 100 | Balance to 100 | Balance to 100 | Balance to 100 | Balance to 100 |
| pH (neat) | 11.0 | 11.5 | 8.5 | 11.0 | 9.0 |

Additional Examples:

Example A: A process for making a filled container comprising recycled thermoplastic polymer material, the process comprising the steps of: (i) pre-treating a recycled plastic polymer material for example by separating, sorting, cleaning and/or drying; (ii) shredding the pre-treated recycled plastic polymer to produce recycled plastic polymer flakes; (iii compacting the recycled plastic polymer flakes to form compacted recycled plastic polymer pellets and processing the compacted recycled plastic polymer pellets to produce a pre-form; (iv) creating a container comprising at least 50 wt% recycled plastic from said pre-form; (v) filling said container with a composition, wherein composition is a liquid spray composition having a pH greater than 8, more preferably from about 10 to about 12 and most preferably from about 10.5 to about 11.5, as measured at 20°C on the neat product composition.

Example B: A process for making a filled container comprising recycled thermoplastic polymer material, the process comprising the steps of: (i) pre-treating a recycled plastic polymer material for example by separating, sorting, cleaning and/or drying; (ii) shredding the pre-treated recycled plastic polymer to produce recycled plastic polymer flakes; (iii compacting the recycled plastic polymer flakes to form compacted recycled plastic polymer pellets and processing the compacted recycled plastic polymer pellets to produce a pre-form; (iv) creating a container comprising at least 50 wt% recycled plastic from said pre-form; (v) filling said container with a composition, wherein the composition is a liquid hand dishwashing detergent composition having a pH, measured as a 10% product concentration in demineralized water at 20°C, of between 3 and 14, more preferably between 4 and 13, more preferably between 6 and 12 and most preferably between 8 and 10.

Example C: The process according to any of Examples A and B, in which the compacted polymer pellets have an average bulk density of at least 300 kg/m$^3$.

Example D: The process according to any of Examples A-C, in which the compaction step is carried out using a disk agglomerator.

Example E: The process according to Examples A-D, wherein the compacted polymer pellets have a water content of less than 0.05wt%, preferably less than 0.02 wt%.

Example F: The process according to any of Examples A-E, in which the compacted pellets are at least partially crystallized.

Example G: The process according to any of Examples A-F, further comprising the step of maintaining the temperature of the compacted pellets to at least 40 degrees C prior to producing the pre-form.

Example H: The process according to any of Examples A-G, in which the polymer is high density polyethylene, low density polyethylene, polypropylene or polyethylene terephthalate, or mixtures thereof, preferably polyethylene terephthalate.

Example I: The process according to any of Examples A-H, wherein the container comprises at least 60 wt% recycled plastic, preferably at least 70 wt%, more preferably at least 80 wt%, even more preferably at least 90 wt%, or most preferably 100 wt% recycled plastic.

Example J: The process according to any of Examples A-I, wherein the pre-form or container comprises a single layer.

Example K: The process according to any of Examples A-I, wherein the pre-form or container comprises a laminate.

Example L: The process according to any of Examples A-I and K, wherein the pre-form or container comprises at least at least three layers, in which the central layer or layers is/are made out of compacted pellets.

Example M: The process according to any of Examples A-L, wherein the composition is in a form of: liquid, gel, powder, or a combination of two or more.

Example N: The process according to any of Examples A-M, wherein the container is selected from the group consisting of: a plastic bottle, an inverted container, and a spray container.

Example O: The process according to any of Examples A-N, wherein the container comprises a plastic polymer composition and comprises at least one of: a colour pigment, a plasticizer, a UV light blocker, and an anti-oxidant.

Example P: The process according to any of Examples A-O, wherein the composition is a detergent composition comprising a surfactant system comprising at least one of anionic surfactant, amphoteric surfactant, zwitterionic surfactant, nonionic surfactant, cationic surfactant, and mixtures thereof.

Example Q: The process according to any of Examples A-P, wherein the composition comprises a surfactant system comprising a mixture of anionic surfactant and amphoteric surfactant, preferably wherein the anionic surfactant comprises alkyl sulfate anionic surfactant, alkoxylated preferably ethoxylated alkyl sulfate anionic surfactant, or mixtures thereof, and wherein the amphoteric surfactant comprises amine oxide, most preferably wherein the anionic surfactant and amphoteric surfactant are present in a ratio of from 2:1 to 4:1.

Example R: The process according to any of Examples A and C-Q, wherein the composition comprises a surfactant system comprising : (1) from 4% to 10%, preferably 5% to 8% by weight of the composition of an alkyl ethoxylated sulfate anionic surfactant; (2) 1% to 5%, preferably from 1% to 4% by weight of the composition of an amine oxide co-surfactant, and (3) from 1.5% to 6.0% of a low cut alcohol ethoxylate nonionic surfactant, having an average alkyl chain length of between C5 and C7 and a number average degree of ethoxylation of from 4 to 6.

Example S: The process according to any of Examples A and C-R, wherein the composition has a pH greater than 8, more preferably from about 10 to about 12 and most preferably from about 10.5 to about 11.5, as measured at 20°C on the neat product composition.

Example T: The process according to any of Examples B and C-Q, wherein the composition is a liquid hand dishwashing spray detergent composition comprising a surfactant system comprising : i) from 3.0 to 7.5% of an alkyl polyglucoside surfactant, preferably having an average alkyl chain length between 12 and 14 and an average degree of polymerization of between 1.2 and 1.6, ii) 2.0 to 4.0% of an amine oxide surfactant, and iii) from 1.5% to 6.0% of a low cut alcohol ethoxylate nonionic surfactant, having an average alkyl chain length of between C5 and C7 and a number average degree of ethoxylation of from 4 to 6.

Example U: The process according to any of Examples B, C-Q and T, wherein the composition has a pH, measured as a 10% product concentration in demineralized water at 20°C, of between 3 and 14, more preferably between 4 and 13, more preferably between 6 and 12 and most preferably between 8 and 10.

Example V: The process according to any of Examples A-U, wherein the composition further comprises a glycol ether solvent, preferably wherein the surfactant system and the glycol ether system are present in a weight ratio of from 5:1 to 1:5.

Example W: The process according to any of Examples A-V, wherein the composition comprises an organic solvent, a perfume, or a mixture thereof.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A process for making a filled container comprising recycled thermoplastic polymer material, the process comprising the steps of:

   (i) pre-treating a recycled plastic polymer material for example by separating, sorting, cleaning and/or drying;
   (ii) shredding the pre-treated recycled plastic polymer to produce recycled plastic polymer flakes;
   (iii) compacting the recycled plastic polymer flakes to form compacted recycled plastic polymer pellets and processing the compacted recycled plastic polymer pellets to produce a pre-form;
   (iv) creating a container comprising at least 50 wt% recycled plastic from said pre-form; and
   (v) filling said container with a composition.

2. The process according to claim 1, in which the compacted polymer pellets have an average bulk density of at least 300 kg/m$^3$.

3. The process according to any of the preceding claims, in which the compaction step is carried out using a disk agglomerator.

4. The process according to any of the preceding claims wherein the compacted polymer pellets have a water content of less than 0.05wt%, preferably less than 0.02 wt%.

5. The process according to any of the preceding claims, in which the compacted pellets are at least partially crystallized.

6. The process according to any of the preceding claims, further comprising the step of maintaining the temperature of the compacted pellets to at least 40 degrees C prior to producing the pre-form.

7. The process according to any of the preceding claims, in which the polymer is high density polyethylene, low density polyethylene, polypropylene or polyethylene terephthalate, or mixtures thereof, preferably polyethylene terephthalate.

8. The process according to any of the preceding claims, wherein the container comprises at least 60 wt% recycled plastic, preferably at least 70 wt%, more preferably at least 80 wt%, even more preferably at least 90 wt%, or most preferably 100 wt% recycled plastic.

9. The process according to any of the preceding claims, wherein the pre-form or container comprises a single layer.

10. The process according to any of the preceding claims, wherein the composition is in a form of: liquid, gel, powder, or a combination of two or more.

11. The process according to any of the preceding claims, wherein the composition is selected from the group consisting of: automatic dishwashing detergent compositions, automatic dishwashing rinse agents, hand dish washing detergents, hand dish washing detergent additives, hand washing soap, body wash, shampoo, conditioner, laundry detergents, fabric softeners, and hard surface cleaners, preferably hand dish washing detergent.

12. The process according to any of the preceding claims, wherein the container is selected from the group consisting of: a plastic bottle, an inverted container, and a spray container.

13. The process according to any of the preceding claims, wherein the container comprises a plastic polymer composition and comprises at least one of: a colour pigment, a plasticizer, a UV light blocker, and an anti-oxidant.

**14.** The process according to any of the preceding claims wherein the composition is a liquid hand dishwashing detergent composition comprising: a surfactant system comprising a mixture of anionic surfactant and amphoteric surfactant, preferably wherein the anionic surfactant comprises alkyl sulfate anionic surfactant, alkoxylated preferably ethoxylated alkyl sulfate anionic surfactant, or mixtures thereof, and wherein the amphoteric surfactant comprises amine oxide, most preferably wherein the anionic surfactant and amphoteric surfactant are present in a ratio of from 2:1 to 4:1.

**15.** The process according to any of claims 1-13, wherein the composition is a liquid hand dishwashing spray detergent composition comprising a surfactant system comprising: (1) from 4% to 10%, preferably 5% to 8% by weight of the composition of an alkyl ethoxylated sulfate anionic surfactant or from 3.0 to 7.5% of an alkyl polyglucoside surfactant, preferably having an average alkyl chain length between 12 and 14 and an average degree of polymerization of between 1.2 and 1.6; (2) 1% to 5%, preferably from 1% to 4% by weight of the composition of an amine oxide co-surfactant, and (3) from 1.5% to 6.0% of a low cut alcohol ethoxylate nonionic surfactant, having an average alkyl chain length of between C5 and C7 and a number average degree of ethoxylation of from 4 to 6.

**16.** The process according to claims 14 and 15 wherein the composition further comprises a glycol ether solvent, preferably wherein the surfactant system and the glycol ether system are present in a weight ratio of from 5:1 to 1:5.

Europäisches
Patentamt

European
Patent Office

Office européen
des brevets

**EUROPEAN SEARCH REPORT**

Application Number

EP 23 15 8914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 116 462 A1 (SIDEL PARTICIPATIONS [FR]) 27 May 2022 (2022-05-27) * claims; figures 2,3; examples * | 1-16 | INV. B29B17/00 B29C49/00 |
| X | EP 3 785 873 A1 (LOGOPLASTE CONSULTORES TECNICOS SA [PT]) 3 March 2021 (2021-03-03) * claims * * paragraphs [0010], [0014], [0016], [0022] - [0024], [0028], [0029], [0031], [0034] - [0041] * | 1-16 | ADD. B29K105/26 |
| X | WO 2022/167679 A1 (ALPLA WERKE ALWIN LEHNER GMBH & CO KG [AT]) 11 August 2022 (2022-08-11) * claims; examples * | 1-16 | |

TECHNICAL FIELDS
SEARCHED        (IPC)

B29B
B29C
B29K

The present search report has been drawn up for all claims

| Place of search | Date of completion of the search | Examiner |
|---|---|---|
| Munich | 1 August 2023 | Dossin, Maxime |

EPO FORM 1503 03.82 (P04C01)

## ANNEX TO THE EUROPEAN SEARCH REPORT
## ON EUROPEAN PATENT APPLICATION NO.

EP 23 15 8914

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2023

| Patent document cited in search report | | Publication date | Patent family member(s) | | Publication date |
|---|---|---|---|---|---|
| FR 3116462 | A1 | 27-05-2022 | FR | 3116462 A1 | 27-05-2022 |
| | | | WO | 2022112276 A1 | 02-06-2022 |
| EP 3785873 | A1 | 03-03-2021 | BR | 112022021930 A2 | 17-01-2023 |
| | | | CA | 3175233 A1 | 04-11-2021 |
| | | | DK | 3785873 T3 | 19-04-2022 |
| | | | EP | 3785873 A1 | 03-03-2021 |
| | | | ES | 2914515 T3 | 13-06-2022 |
| | | | HR | P20220586 T1 | 02-09-2022 |
| | | | LT | 3785873 T | 10-05-2022 |
| | | | PL | 3785873 T3 | 27-06-2022 |
| | | | PT | 3785873 T | 23-03-2022 |
| | | | RS | 63131 B1 | 31-05-2022 |
| | | | SI | 3785873 T1 | 30-09-2022 |
| | | | US | 2021340349 A1 | 04-11-2021 |
| | | | WO | 2021219892 A1 | 04-11-2021 |
| WO 2022167679 | A1 | 11-08-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10131473 B
- US 10611531 B
- US 10934510 B
- US 11427793 B
- US 11136160 B